# EUROPÄISCHE PATENTSCHRIFT

(11) **EP 3 271 658 B1**
(45) Veröffentlichungstag und Bekanntmachung des Hinweises auf die Patenterteilung: **22.01.2025**
(21) Anmeldenummer: 15711111.3
(22) Anmeldetag: 16.03.2015
(51) Int. Cl.: F24F 5/00, F24S 20/66

(54) **VORRICHTUNG ZUR KLIMATISIERUNG EINES GEBÄUDES**
DEVICE FOR AIR-CONDITIONING A BUILDING
DISPOSITIF DE CLIMATISATION D'UN BÂTIMENT

(43) Veröffentlichungstag der Anmeldung: 24.01.2018
(73) Patentinhaber: Lysicorp AG, 9053 Teufen AR (CH)
(72) Erfinder: KASZIAN, Peter, 85567 Grafing bei München (DE)
(74) Vertreter: Rigling, Peter Daniel
(86) Internationale Anmeldenummer: PCT/EP2015/055398
(87) Internationale Veröffentlichungsnummer: WO 2016/146156

(56) Entgegenhaltungen:
- EP-A1- 1 619 444
- EP-A2- 2 146 150
- CH-A2- 703 760
- DE-A1- 102013 021 773
- US-A1- 2011 192 393

## Beschreibung

Die vorliegende Erfindung betrifft eine Vorrichtung zur Klimatisierung eines Gebäudes nach dem Oberbegriff gemäss Anspruch 1.

Mit Gebäudeklimatisierung versucht der Mensch seit der Antike im Sommer und in den warmen Regionen eine optimale Lösung für ein angenehmes Raumklima zu schaffen. Die Ansätze sind so alt und vielfältig, wie das Problem selbst.

Eine effiziente, aber dafür sehr kostspielige und gesundheitlich bedenkliche Lösung ist die Nutzung von Klimaanlagen, die zwar eine regelbare und beeinflussbare Lösung darstellen, allerdings auf Kosten eines wirklich angenehmen Raumklimas. Andere Ansätze, wie Verschattung, ausgeklügelte Lüftungssysteme, Verdunstungskälte durch Dachbegrünungen oder Verdunstungselementen haben den Nachteil des geringen Wirkungsgrades und der fehlenden Regelung.

Zudem sind bekannte Lehren zur Gebäudelufttemperierung aus der DE 41 03 010 A1 und der DE 10 2008 009 085 B4 bekannt, wobei auch bei diesen bekannten Lehren ein Luftstrom erzeugt wird, der - wie bei Klimaanlagen - häufig als unangenehm empfunden wird. Weitere bekannte Lehren sind in EP-1 619 444 A1 und in US 2011/192393 A1 offenbart.

Die Aufgabe der vorliegenden Erfindung bestand daher darin, eine Vorrichtung zur Klimatisierung eines Gebäudes zu schaffen, das die vorstehend genannten Nachteile nicht aufweist.

Diese Aufgabe wird durch die im kennzeichnenden Teil von Anspruch 1 angegebenen Merkmale gelöst. Weitere Ausführungsvarianten der erfindungsgemässen Vorrichtung sind in weiteren Ansprüchen angegeben.

Die Erfindung betrifft eine Vorrichtung zur Klimatisierung eines Gebäudes. Die erfindungsgemässe Vorrichtung umfasst:
- das Gebäude mit einer Aussenseite und einer Innenseite,
- flächig ausgebildete äussere Temperierelemente, die die Aussenseite des Gebäudes zumindest teilweise überdecken, wobei die äusseren Temperierelemente (5) auf einen vorgebbaren Temperaturwert einstellbar sind und wobei die äusseren Temperierelemente (5) in Bezug auf die Gebäudeaussenseite beabstandet angeordnet sind, so dass zwischen Gebäudeaussenseite und äusserem Temperierelement (5) ein erster Zwischenraum (18) entsteht. Die erfindungsgemässe Vorrichtung zeichnet sich dadurch aus,
- dass der erste Zwischenraum in sich geschlossen ist und
- dass ein Sammelsystem für Kondenswasser vorgesehen ist, um auf dem äusseren Temperierelement (5) im ersten Zwischenraum (18) gebildetes Kondenswasser abzuführen.

Im Unterschied zu bekannten Klimatisierungssystemen verhindert die erfindungsgemässe Vorrichtung ein Eindringen von warmer Luft in das Gebäude, das bei der Nutzung von Klimaanlagen mit hohem Energieaufwand wieder aus dem Gebäude geblasen werden muss und dadurch die Aussentemperatur um das Gebäude herum noch erhöht. Bei dem Einsatz erfindungsgemässen Vorrichtung wird verhindert, dass die Wände und die Dächer von Gebäuden sich aufheizen und diese Wärme über einen sehr langen Zeitraum in das Innere des Gebäudes gelangt und nach aussen hin abstrahlt. Dadurch entsteht zum einen ein angenehmes Raumklima im Gebäude, zum anderen wird durch die fehlende Wärmestrahlung nach außen ein angenehmeres Klima auch um das Gebäude herum erhalten. Auf diese Weise ist die im Vergleich zu den Aussenbezirken höhere Temperatur in den Innenstädten reduziert.

Eine Ausführungsvariante der erfindungsgemässen Vorrichtung besteht darin,
- dass flächig ausgebildete innere Temperierelemente eine Innenseite des Gebäudes zumindest teilweise überdecken und
- dass die inneren Temperierelemente auf einen vorgebbaren Temperaturwert einstellbar sind.

Weitere Ausführungsvarianten der erfindungsgemässen Vorrichtung bestehen darin, dass mindestens eine Temperiereinheit und ein Verteilsystem vorgesehen ist, das mit mindestens einem Temperierelemente und der mindestens einen Temperiereinheit wirkverbunden ist, und dass im Verteilsystem ein Temperiermedium vorhanden ist, mit dem der vorgegebene Temperaturwert im mindestens einen Temperierelement einstellbar ist.

Noch weitere Ausführungsvarianten der erfindungsgemässen Vorrichtung bestehen darin, dass das Temperiermedium mindestens eine der folgenden Eigenschaften aufweist:
- flüssig;
- zumindest Anteil besteht aus Wasser;
- Gefrierpunkt unter 0° Celsius, vorzugsweise unter 5° Celsius;
- gasförmig;
- zumindest Anteil besteht aus Luft.

Insbesondere durch die Verwendung einer niedrigtemperierten Temperiermedium - z. B. in einem Temperaturbereich von 4°C bis 5°C - kann der Wirkungsgrad deutlich erhöht werden und mittels Steuerung der Fliessgeschwindigkeit des Temperiermediums die Wärmeaufnahme geregelt werden. Die Nutzung der durch die Aussentemperatur auf 17°C bis 18°C aufgewärmten Flüssigkeit in den Innenräumen als Decken oder Wandkühlung sorgt für die weitere Senkung der Innentemperatur, die durch internen Wärmequellen beeinflusst ist.

Weitere Ausführungsvarianten der erfindungsgemässen Vorrichtung bestehen darin, dass die Temperierelemente mindestens 50%, vorzugsweise mindestens 80% der Aussenseite bzw. der Innenseite bedecken.

Weitere Ausführungsvarianten der erfindungsgemässen Vorrichtung bestehen darin, dass die inneren Temperierelemente in Bezug auf die Gebäudeinnenseite beabstandet angeordnet sind, so dass zwischen Gebäudeinnenseite und innerem Temperierelement ein zweiter Zwischenraum entsteht.

Weitere Ausführungsvarianten der erfindungsgemässen Vorrichtung bestehen darin, dass eine Klimahülle die Aussenseite des Gebäudes mit Ausnahme von Fenstern und Türen umgibt, wobei die äusseren Temperierelemente in die Klimahülle integriert sind.

Weitere Ausführungsvarianten der erfindungsgemässen Vorrichtung bestehen darin, dass eine korrosionsfeste Metallschicht auf der zum Gebäude hin gerichteten Oberfläche der Temperierelemente vorhanden ist.

Weitere Ausführungsvarianten der erfindungsgemässen Vorrichtung bestehen darin, dass die Temperierelemente aus einer Folie bestehen, durch die das Temperiermedium auf mehrfach angelegten Wegen von einer Einlassöffnung zu einer Auslassöffnung förderbar ist.

Weitere Ausführungsvarianten der erfindungsgemässen Vorrichtung bestehen darin, dass eine Dämmschicht besteht, die zumindest die äusseren Temperierelemente auf deren Aussenseite überdecken, wobei die Dämmschicht vorzugsweise mit einer korrosionsfesten Abdeckung von aussen überdeckt ist.

Weitere Ausführungsvarianten der erfindungsgemässen Vorrichtung bestehen darin, dass die korrosionsfeste Metallschicht eine oberflächenvergrössernde Struktur auf der zum Gebäude hin gerichteten Oberfläche der Temperierelemente aufweist.

Weitere Ausführungsvarianten der erfindungsgemässen Vorrichtung bestehen darin, dass das von einer Temperiereinheit abgegebene Temperiermedium zunächst äussere Temperiereinheiten und dann innere Temperiereinheiten durchströmt.

Es wird ausdrücklich darauf hingewiesen, dass die vorstehend genannten Ausführungsvarianten oder kombinierte Ausführungsvarianten kombiniert werden können, solange die Kombination in den Schutzbereich der Erfindung gemäß der Definition in den beigefügten Ansprüchen fällt und die Kombination zu keinem Widerspruch führt.

Ausführungsbeispiele der vorliegenden Erfindung werden nachstehend anhand von Figuren weiter erläutert. Es zeigen
- Fig. 1: einen Schnitt durch einen Bereich eines Gebäudes, das mit einer erfinderischen Vorrichtung zur Klimatisierung ausgestattet ist, wobei zwei Details A und B vergrössert dargestellt sind,
- Fig. 2: eine Draufsicht auf ein erfindungsgemässes Temperierelement mit Ein- und Austrittsöffnung für Temperiermedium, und
- Fig. 3: einen Schnitt durch ein in einem Dämmelement integriertes Temperierelement gemäss einer Ausführungsvariante der vorliegenden Erfindung.

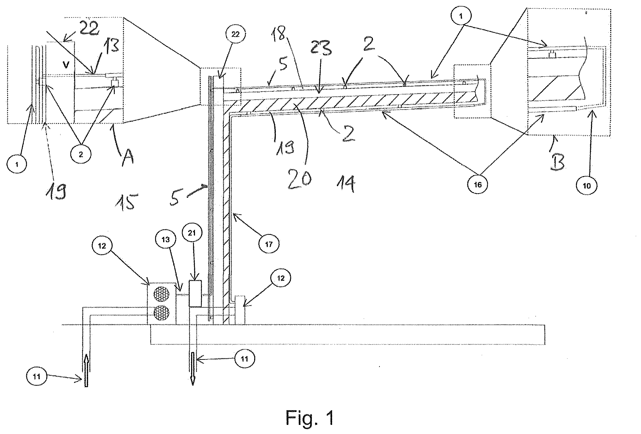

Fig. 1 zeigt einen Schnitt durch einen Bereich eines Gebäudes 20 mit einem Dachaufbau 23 und einer Fassade 22. Erfindungsgemäss ist auf der Gebäudeaussenseite - d.h. auf dem Dachaufbau 23 bzw. auf der Fassade 22 - eine Tragkonstruktion 2 vorgesehen, die ein beabstandetes montieren eines äusseren Temperierelementes 5 erlaubt, wobei dieses flächig ausgebildet ist und die Aussenseite des Gebäudes 20 zumindest teilweise überdeckt. Zwischen der äusseren Temperiereinheit 5 und der äusseren Oberfläche der Fassade 22 bzw. des Dachaufbaus 23 entsteht durch die beabstandete Montage ein Zwischenraum 18, der im Folgenden auch etwa als erster Zwischenraum 18 bezeichnet wird. Damit der erste Zwischenraum 18 in sich geschlossen ist, bilden die äusseren Temperierelemente 5 eine eigentliche Klimahülle 1, die insbesondere das ganze Gebäude 20 umfassen kann. Damit wird es ermöglicht, die Temperatur des Gebäudes 20, inklusive Fassade 22 und Deckaufbau 23, auf einem vorgegebenen Temperaturwert zu halten.

Der grosse Vorteil, der durch die vorliegende Erfindung erhalten wird, wird durch ein einfaches Berechnungsbeispiel illustriert: Geht man von einer Gebäudegrundfläche von 100x100m und einer Gebäudehöhe von 8 Metern aus, so erhält man ein umbautes Gebäudevolumen von 80'000m³. Bei einer herkömmlichen Gebäudeklimatisierung muss dieses Gebäudevolumen von 80'000m³ aktiv gekühlt werden. Ist jedoch nur der Zwischenraum zu kühlen, wie dies erfindungsgemäss vorgesehen ist, und geht man davon aus, dass - wiederum bei identischen Gebäudeabmessungen - der oben definierte Zwischenraum eine Tiefe von 5cm aufweist, so ergibt sich bei der vorliegenden Erfindung lediglich ein zu kühlendes Volumen von ca. 700m³, was gegenüber der herkömmlichen Gebäudeklimatisierung offensichtlich erheblich kleiner ist. Entsprechend gross fallen die Einsparmöglichkeiten bei den für die Kühlung aufzuwendenden Energiekosten für eine Klimatisierung gemäss der vorliegenden Erfindung aus.

Bei einer weiteren Ausführungsvariante der erfindungsgemässen Vorrichtung ist zusätzlich ein inneres Temperierelement 16, 17, das wiederum flächig und das die Innenseite des Gebäudes 20 zumindest teilweise überdeckt. Zwischen der inneren Temperiereinheit 16, 17 und der inneren Oberfläche des Gebäudes 20 entsteht durch eine beabstandete Montage mittels Tragkonstruktion 2 ein zweiter Zwischenraum 19.

Damit auch der zweite Zwischenraum 19 in sich geschlossen ist, vervollständigen die inneren Temperierelemente 5 die Klimahülle 1 um die Gebäudekonstruktion. Damit wird es ermöglicht, die Temperatur des gesamten Gebäudes 20, inklusive Fassade 22 und Deckaufbau 23, auf einem vorgegebenen Temperaturwert zu halten. Damit sind die Voraussetzungen für eine optimale Raumklimatisierung geschaffen, denn die Temperatur eines Temperiermediums 11 wird auf einen vorgegebenen Wert eingestellt, wobei dies beispielsweise mit einer Temperiereinheit 12 erfolgt. Das Temperiermedium 11 wird in der Folge durch die äusseren Temperierelemente 5 geleitet, wobei hierzu ein Verteilsystem 10, 13 vorgesehen ist, das mit den Temperierelementen 5 verbunden ist. Das Temperiermedium 11 wird nach dem Verlassen eines äusseren Temperierlementes 5 entweder über das Verteilsystem 10, 13 zur Temperiereinheit 12 zurückgeleitet oder das Temperiermedium 11 wird zunächst den inneren Temperierelementen 16, 17 zugeführt.

Das Temperiermedium 11 weist in Abhängigkeit der jeweiligen Anwendung spezifische Anforderungen auf. Insbesondere weist das Temperiermedium 11 mindestens eine der folgenden Eigenschaften auf:
- flüssig;
- zumindest Anteil besteht aus Wasser;
- Gefrierpunkt unter 0° Celsius, vorzugsweise unter 5° Celsius;
- gasförmig;
- zumindest Anteil besteht aus Luft.

In Fig. 1 sind die beiden Details A und B jeweils vergrössert dargestellt. Es geht hierbei um das Aufzeigen von möglichen Realisierungen des Verteilsystems in einem Eckbereich eines Gebäudes 20 (Detail A) oder in einem Übergangsbereich von einem äusseren Temperierelement 5 zu einem inneren Temperierelement 16, 17 (Detail B).

Schliesslich gibt es eine Reihe von Möglichkeit, das Temperiermedium 11 auf einen vorgegebenen Wert einzustellen. In Fig. 1 ist eine Möglichkeit dargestellt, bei der als Temperiermedium 11 gefiltertes Grundwasser verwendet wird. Da Grundwasser in der Regel eine tiefere Temperatur aufweist, sind Energieaufwendungen für die Kühlung geringer, da eine Vorkühlung bereits erfolgt ist. Die Temperiereinheit 12 ist dann nur erforderlich, wenn sich die Temperatur des Grundwassers als zu hoch für die Kühlung erweist. Nur dann ist eine Abkühlung des Temperiermediums 11 mit einem herkömmlichen Klimagerät erforderlich.

Bei einem konkreten Anwendungsfall hat sich gezeigt, dass das Temperiermedium 11 auf eine Temperatur von 4°C bis 5°C gekühlt werden muss. Das über das Verteilsystem 10, 13 verteilte und durch die äusseren Temperierelemente 5 geleitete Temperiermedium 11 hat sich dann auf eine Temperatur von 17°C bis 18°C erwärmt. Das Temperiermedium 11 in diesem Temperturbereich eignete sich vorzüglich zur direkten Einleitung in die inneren Temperierelemente 16, 17 und anschliessenden Rückleitung zur Temperiereinheit bzw. zur Rückleitung ins Grundwasser. Hiermit konnten im Innenraum 14 angenehme klimatische Bedingungen geschaffen werden.

Bei einer weiteren Ausführungsvariante der vorliegenden Erfindung ist es vorgesehen, anstelle oder zusätzlich zur Regelung der Temperatur des Temperiermediums 11 die Einstellung der klimatischen Bedingungen im Innenraum 14 über die Fliessgeschwindigkeit des Temperiermediums 11 vorzunehmen. Hierzu ist eine Steuerungseinheit 21 vorgesehen, die eine steuerbare Pumpe für das Temperiermedium 11 umfasst.

Wie bereits erläutert worden ist, zeigt Fig. 1 sowohl auf der Aussenseite als auch auf der Innenseite des Gebäudes 20 jeweils einen Zwischenraum. Ein Zwischenraum zwischen Gebäudebestandteilen und dem Temperierelementen ist insbesondere angezeigt, wenn das Temperiermedium 11, und als Folge davon auch die Oberflächen der Temperierelemente, stark gekühlt werden, wie dies beispielsweise im vorstehend genannten Beispiel der Fall ist. So wird sich bei hohen Temperaturdifferenzen Kondensationswasser auf den Oberflächen der Temperierelemente ablagern, was zu Feuchtigkeitsschäden am Gebäude 20 oder an der Klimahülle 1 führen kann. Gemäß der Erfindung sind die äußeren Temperierelemente 5 in Bezug auf die Gebäudeaußenseite beabstandet angeordnet, so dass zwischen Gebäudeaußenseite und äußerem Temperierelement ein erster Zwischenraum 18 entsteht.

Gemäß der vorliegenden Erfindung wird daher vorgeschlagen, Kondensationswasser, das sich auf Temperierelementen bildet, gezielt abzuführen. Entsprechend ist ein Sammelsystem für Kondensationswasser vorgesehen (in Fig. 1 nicht dargestellt), womit gewährleistet wird, dass keine Schäden am Gebäude 20 entstehen können.

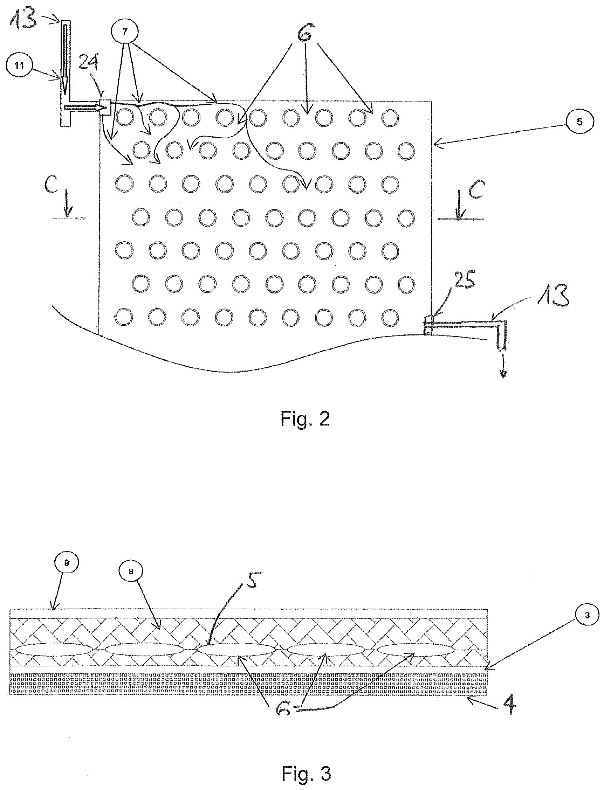

Fig. 2 zeigt eine Draufsicht auf eine Ausführungsvariante für ein erfindungsgemässes Temperierelement 5. Es handelt sich hierbei um zwei Folien, die punktförmige Schweissstellen aufweisen, welche die beiden Folien zusammenhalten. Das Temperiermedium 11, das durch eine Eintrittsöffnung 24 in das Temperierelement 5 eintritt, wird durch die Schweissstellen auf verschiedenen Pfaden 7 zu einer Austrittöffnung 25 befördert. Dem Temperiermedium 11 stehen demzufolge eine Vielzahl an Pfaden von der Eintrittsöffnung 24 zur Austrittsöffnung 25 zur Verfügung, womit eine optimale Temperaturverteilung im Temperierelement 5 erhalten wird.

Fig. 3 zeigt einen Schnitt durch eine in Fig. 2 angedeutete Schnittebene C-C durch ein Temperierelement 5, wobei neben dem eigentlichen Temperierelement 5 auch weitere Schichten ersichtlich sind. So ist das Temperierelement 5 in eine Dämmschicht 8 integriert, die nach aussen hin mit einer korrosionsfesten Abdeckung 9 abgedeckt ist, mit der die darunter liegenden Bestandteile von Ausseneinflüssen wie Wasser, Schnee, UV-Strahlung oder dergleichen geschützt wird.

Auf der gegenüberliegenden Seite der Dämmschicht 8 ist eine korrosionsfeste Metallschicht 3 vorgesehen, die ein Eindringen von Kondensationswasser in die Dämmschicht 8 verhindert. Bei einer Ausführungsform der vorliegenden Erfindung ist, wie in Fig. 3 dargestellt, anschliessend an die korrosionsfeste Metallschicht 3 eine oberflächenvergrössernde Struktur 4 ersichtlich, die den Wärme- bzw. Kältefluss vom Temperierelement 5 zur Umgebung - insbesondere in den Zwischenraum begünstigt.

## Patentansprüche

1. Vorrichtung zur Klimatisierung eines Gebäudes (20), wobei die Vorrichtung umfasst:
- das Gebäude (20) mit einer Aussenseite und einer Innenseite,
- flächig ausgebildete äussere Temperierelemente (5), die die Aussenseite des Gebäudes (20) zumindest teilweise überdecken,
wobei die äusseren Temperierelemente (5) auf einen vorgebbaren Temperaturwert einstellbar sind und wobei die äusseren Temperierelemente (5) in Bezug auf die Gebäudeaussenseite beabstandet angeordnet sind, so dass zwischen Gebäudeaussenseite und äusserem Temperierelement (5) ein erster Zwischenraum (18) entsteht,
**dadurch gekennzeichnet,**
- **dass** der erste Zwischenraum (18) in sich geschlossen ist, und
- **dass** ein Sammelsystem für Kondenswasser vorgesehen ist, um auf dem äusseren Temperierelement (5) im ersten Zwischenraum (18) gebildetes Kondenswasser abzuführen.

2. Vorrichtung nach Anspruch 1, **dadurch gekennzeichnet, dass** auf der Gebäudeaussenseite eine Tragkonstruktion (2) vorgesehen ist, auf der das äussere Temperierelement (5) zur Aussenseite beabstandet montiert ist.

3. Vorrichtung nach Anspruch 1 oder 2, **dadurch gekennzeichnet,**
- **dass** flächig ausgebildete innere Temperierelemente (16, 17) eine Innenseite des Gebäudes (20) zumindest teilweise überdecken und
- **dass** die inneren Temperierelemente (16, 17) auf einen vorgebbaren Temperaturwert einstellbar sind.

4. Vorrichtung nach einem der vorangehenden Ansprüche, **dadurch gekennzeichnet, dass** mindestens eine Temperiereinheit (12) und ein Verteilsystem (10, 13) vorgesehen ist, das mit mindestens einem Temperierelement (5; 16, 17) und der mindestens einen Temperiereinheit (12) wirkverbunden ist, und dass im Verteilsystem (10, 13) ein Temperiermedium (6, 11) vorhanden ist, mit dem der vorgegebene Temperaturwert im mindestens einen Temperierelement (5; 16, 17) einstellbar ist.

5. Vorrichtung nach Anspruch 4, **dadurch gekennzeichnet, dass** das Temperiermedium (6, 11) mindestens eine der folgenden Eigenschaften aufweist:
- flüssig;
- zumindest Anteil besteht aus Wasser;
- Gefrierpunkt unter 0° Celsius, vorzugsweise unter 5° Celsius;
- gasförmig;
- zumindest Anteil besteht aus Luft.

6. Vorrichtung nach einem der Ansprüche 3 bis 5, **dadurch gekennzeichnet, dass** die Temperierelemente (5; 16, 17) mindestens 50%, vorzugsweise mindestens 80% der Aussenseite bzw. der Innenseite bedecken.

7. Vorrichtung nach einem der Ansprüche 3 bis 6, **dadurch gekennzeichnet, dass** die inneren Temperierelemente (16, 17) in Bezug auf die Gebäudeinnenseite beabstandet angeordnet sind, so dass zwischen Gebäudeinnenseite und innerem Temperierelement (16, 17) ein vorzugsweise in sich geschlossener zweiter Zwischenraum (19) entsteht.

8. Vorrichtung nach Anspruch 7, **dadurch gekennzeichnet, dass** auf der Gebäudeinnenseite eine Tragkonstruktion (2) vorgesehen ist, auf der das innere Temperierelement (5) zur Innenseite beabstandet montiert ist.

9. Vorrichtung nach einem der Ansprüche 1 bis 8, **dadurch gekennzeichnet, dass** eine Klimahülle die Aussenseite des Gebäudes (20) mit Ausnahme von Fenstern und Türen umgibt, wobei die äusseren Temperierelemente (5) in die Klimahülle integriert sind.

10. Vorrichtung nach einem der Ansprüche 1 bis 9, **dadurch gekennzeichnet, dass** eine korrosionsfeste Metallschicht (3) auf der zum Gebäude (20) hin gerichteten Oberfläche der Temperierelemente (5; 16, 17) vorhanden ist.

11. Vorrichtung nach einem der Ansprüche 4 bis 10, **dadurch gekennzeichnet, dass** die Temperierelemente (5; 16, 17) aus einer Folie bestehen, durch die das Temperiermedium (6, 11) auf mehrfach angelegten Wegen von einer Einlassöffnung (24) zu einer Auslassöffnung (25) förderbar ist.

12. Vorrichtung nach einem der Ansprüche 4 bis 10, **dadurch gekennzeichnet, dass** eine Dämmschicht (8) besteht, die zumindest die äusseren Temperierelemente (5) auf deren Aussenseite überdecken, wobei die Dämmschicht (8) vorzugsweise mit einer korrosionsfesten Abdeckung (9) von aussen überdeckt ist.

13. Vorrichtung nach einem der Ansprüche 10 bis 12, **dadurch gekennzeichnet, dass** die korrosionsfeste Metallschicht (3) eine oberflächenvergrössernde Struktur (4) auf der zum Gebäude (20) hin gerichteten Oberfläche der Temperierelemente (5; 16, 17) aufweist.

14. Vorrichtung nach einem der Ansprüche 4 bis 13, **dadurch gekennzeichnet, dass** das von einer Temperiereinheit (5; 16, 17) abgegebene Temperiermedium (6, 11) zunächst äussere Temperiereinheiten (5) und dann innere Temperiereinheiten (16, 17) durchströmt.

## Claims

1. Device for air conditioning a building (20), wherein the device comprising:
- the building (20) with an outside and an inside,
- flat outer tempering elements (5) which at least partially cover the outside of the building (20), wherein the outer tempering elements (5) can be set to a predeterminable temperature value and where the outer tempering elements (5) are arranged at a distance from the outside of the building so that a first intermediate space (18) is created between the outside of the building and the outer tempering element (5),
**characterized**
- **in that** the first intermediate space (18) is self-contained, and
- **in that** a collection system for condensate is provided to drain condensate formed on the outer tempering element (5) in the first intermediate space (18).

2. Device according to claim 1, **characterized in that** a supporting structure (2) is provided on the outside of the building, on which the outer tempering element (5) is mounted at a distance from the outside.

3. Device according to claim 1 or 2, **characterized in that**
- flat inner tempering elements (16, 17) at least partially cover an inside of the building (20) and
- that the inner tempering elements (16, 17) can be set to a predeterminable temperature value.

4. Device according to one of the preceding claims, **characterized in that** at least one tempering unit (12) and a distribution system (10, 13) are provided, which is operatively connected to at least one tempering element (5; 16, 17) and the at least one tempering unit (12), and that a tempering medium (6, 11) is present in the distribution system (10, 13), with which the predetermined temperature value in the at least one tempering element (5; 16, 17) can be set.

5. Device according to claim 4, **characterized in that** the tempering medium (6, 11) has at least one of the following properties:
- liquid;
- at least part consists of water;
- freezing point below 0° Celsius, preferably below 5° Celsius;
- gaseous;
- at least part consists of air.

6. Device according to one of claims 3 to 5, **characterized in that** the tempering elements (5; 16, 17) cover at least 50%, preferably at least 80% of the outside or the inside.

7. Device according to one of claims 3 to 6, **characterized in that** the inner tempering elements (16, 17) are arranged at a distance from the inside of the building, so that a preferably self-contained second intermediate space (19) is created between the inside of the building and the inner tempering element (16, 17).

8. Device according to claim 7, **characterized in that** a supporting structure (2) is provided on the inside of the building, on which the inner tempering element (5) is mounted at a distance from the inside.

9. Device according to one of claims 1 to 8, **characterized in that** a climate shell surrounds the outside of the building (20) except for windows and doors, wherein the outer tempering elements (5) are integrated into the climate shell.

10. Device according to one of claims 1 to 9, **characterized in that** a corrosion-resistant metal layer (3) is present on the surface of the tempering elements (5; 16, 17) directed towards the building (20).

11. Device according to one of claims 4 to 10, **characterized in that** the tempering elements (5; 16, 17) consist of a film through which the tempering medium (6, 11) can be conveyed on multiple paths from an inlet opening (24) to an outlet opening (25).

12. Device according to one of claims 4 to 10, **characterized in that** there is an insulating layer (8) which covers at least the outer tempering elements (5) on their outside, wherein the insulating layer (8) is preferably covered from the outside with a corrosion-resistant cover (9).

13. Device according to one of claims 10 to 12, **characterized in that** the corrosion-resistant metal layer (3) has a surface-enlarging structure (4) on the surface of the tempering elements (5; 16, 17) directed towards the building (20).

14. Device according to one of claims 4 to 13, **characterized in that** the tempering medium (6, 11) delivered by a tempering unit (5; 16, 17) first flows through outer tempering units (5) and then through inner tempering units (16, 17).

## Revendications

1. Dispositif de climatisation d'un bâtiment (20), le dispositif comprenant :
- le bâtiment (20) avec un extérieur et un intérieur,
- des éléments de régulation de température extérieurs plats (5) qui recouvrent au moins partiellement l'extérieur du bâtiment (20),
où les éléments de régulation de température extérieurs (5) pouvant être réglés à une valeur de température prédéfinissable et les éléments de régulation de température extérieurs (5) étant disposés à distance de l'extérieur du bâtiment de sorte qu'un premier espace intermédiaire (18) soit créé entre l'extérieur du bâtiment et l'élément de régulation de température extérieur (5),
**caractérisé**
- **en ce que** le premier espace intermédiaire (18) est autonome, et
- **en ce qu'**un système de collecte de condensat est prévu pour évacuer le condensat formé sur l'élément de régulation de température extérieur (5) dans le premier espace intermédiaire (18).

2. Dispositif selon la revendication 1, **caractérisé en ce qu'**une structure de support (2) est prévue à l'extérieur du bâtiment, sur laquelle l'élément de régulation de température extérieur (5) est monté à distance de l'extérieur.

3. Dispositif selon la revendication 1 ou 2, **caractérisé en ce que**
- des éléments de régulation de température intérieurs plats (16, 17) recouvrent au moins partiellement un intérieur du bâtiment (20) et
- que les éléments de régulation de température intérieurs (16, 17) peuvent être réglés à une valeur de température prédéfinissable.

4. Dispositif selon l'une des revendications précédentes, **caractérisé en ce qu'**il est prévu au moins une unité de régulation de température (12) et un système de distribution (10, 13) qui est relié de manière fonctionnelle à au moins un élément de régulation de température (5 ; 16, 17) et à l'au moins une unité de régulation de température (12), et **en ce qu'**un milieu de régulation de température (6, 11) est présent dans le système de distribution (10, 13) avec lequel la valeur de température prédéterminée dans l'au moins un élément de régulation de température (5 ; 16, 17) peut être réglée.

5. Dispositif selon la revendication 4, **caractérisé en ce que** le milieu de régulation de température (6, 11) présente au moins l'une des propriétés suivantes :
- liquide ;
- au moins en partie constitué d'eau ;
- point de congélation inférieur à 0° Celsius, de préférence inférieur à 5° Celsius ;
- gazeux ;
- au moins en partie constitué d'air.

6. Dispositif selon l'une des revendications 3 à 5, **caractérisé en ce que** les éléments de régulation de température (5 ; 16, 17) recouvrent au moins 50%, de préférence au moins 80% de l'extérieur ou de l'intérieur.

7. Dispositif selon l'une des revendications 3 à 6, **caractérisé en ce que** les éléments de régulation de température intérieurs (16, 17) sont disposés à distance de l'intérieur du bâtiment, de sorte qu'un deuxième espace intermédiaire (19) de préférence autonome est créé entre l'intérieur du bâtiment et l'élément de régulation de température intérieur (16, 17).

8. Dispositif selon la revendication 7, **caractérisé en ce qu'**une structure de support (2) est prévue à l'intérieur du bâtiment, sur laquelle l'élément de régulation de température intérieur (5) est monté à distance de l'intérieur.

9. Dispositif selon l'une des revendications 1 à 8, **caractérisé en ce qu'**une enveloppe climatique entoure l'extérieur du bâtiment (20) à l'exception des fenêtres et des portes, les éléments de régulation de température extérieurs (5) étant intégrés dans l'enveloppe climatique.

10. Dispositif selon l'une des revendications 1 à 9, **caractérisé en ce qu'**une couche métallique (3) résistante à la corrosion est présente sur la surface des éléments de régulation de température (5 ; 16, 17) dirigée vers le bâtiment (20).

11. Dispositif selon l'une des revendications 4 à 10, **caractérisé en ce que** les éléments régulation de température (5 ; 16, 17) sont constitués d'un film à travers lequel le fluide de régulation de température (6, 11) peut être transporté sur plusieurs trajets à partir d'une ouverture d'entrée (24) à une ouverture de sortie (25) .

12. Dispositif selon l'une des revendications 4 à 10, **caractérisé en ce qu'**il existe une couche isolante (8) qui recouvre au moins les éléments de régulation de température extérieurs (5) sur leur extérieur, la couche isolante (8) étant de préférence recouverte de l'extérieur par un revêtement résistant à la corrosion (9).

13. Dispositif selon l'une des revendications 10 à 12, **caractérisé en ce que** la couche métallique résistante à la corrosion (3) présente une structure d'agrandissement de surface (4) sur la surface des éléments de régulation de température (5 ; 16, 17) dirigée vers le bâtiment ( 20).

14. Dispositif selon l'une des revendications 4 à 13, **caractérisé en ce que** le fluide de régulation de température (6, 11) délivré par une unité de régulation de température (5 ; 16, 17) traverse d'abord des unités de régulation de température extérieures (5) puis des unités de régulation de température intérieures (16, 17).
